# EUROPÄISCHE PATENTSCHRIFT

(11) **EP 0 953 498 B1**
(45) Veröffentlichungstag und Bekanntmachung des Hinweises auf die Patenterteilung: **02.07.2003**
(21) Anmeldenummer: 99107813.0
(22) Anmeldetag: 20.04.1999
(51) Int. Cl.: B62D 55/275

(54) **Aufschiebestück für ein Gleiskettenglied**
Slide-on element for a track link
Elément enfilable pour un maillon de chenille

(30) Priorität: 29.04.1998 DE 19820175
(43) Veröffentlichungstag der Anmeldung: 03.11.1999
(73) Patentinhaber: Diehl Remscheid GmbH & Co., D-42857 Remscheid (DE)
(72) Erfinder: Spies, Klaus, 42859 Remscheid (DE); Oertgen, Ekkehard, 42877 Radevormwald (DE)
(74) Vertreter: Hofmann, Gerhard, Dipl.-Ing. Patentassessor

(56) Entgegenhaltungen:
- EP-A- 0 044 137
- WO-A-96/29234
- DE-B- 1 605 509

## Beschreibung

Die Erfindung bezieht sich auf ein Gleiskettenglied nach dem Oberbegriff des Anspruchs 1.

Aus der DE-AS 16 05 509, von der die Erfindung ausgeht, ist ein Gleiskettenglied mit einem plattenförmigen Aufschiebestück in Form eines Laufpolsters bekannt. Das Gleiskettenglied besteht aus einem Grundkörper mit Führungsnuten und einer Rastung. Das Aufschiebestück besitzt ein fedemdes Grundblech mit einer ausgestanzten Zunge. Beim Aufschieben des Laufpolsters in das Gleiskettenglied gleitet die Zunge über den Anschlag und wird dabei entsprechend verformt, bis die Zunge hinter den Anschlag einrastet. Beim Ausschieben des Laufpolsters aus dem Gleiskettenglied wird die Zunge aufgrund eines in eine Ausnehmung des Grundkörpers steckbaren Hebels über den Anschlag gehoben. Durch die Ausstanzung der Zunge liegt aufgrund der Kerbwirkung eine Rißgefahr im Grundblech vor, die zum Abfliegen des Laufpolsters aus dem Gleiskettenglied führen kann.

Dieses Festlegungsprinzip ist auch bei Laufpolstern nach der DE 33 35 937 C2 und der DE 195 44 458 A1 bekannt.

Ein Laufpolster entsprechend der WO 96/29234 A besitzt im Gummikörper speziell eingelagerte Verstärkungselemente in Form von Z-förmigen Winkelblechen. Aufgrund der nur partiellen Verstärkung der, aus Kunststoff bestehenden Grundplatte mittels dieser Winkelbleche ist das Laufpolster im Fahrbetrieb eines Gleiskettenfahrzeuges extremen Verformungen ausgesetzt, die zu einer Auflösung der Sperrfunktion der Winkelbleche im Gleiskettenglied führen können. Auch hier besteht die Gefahr der unkontrollierten Ablösungen von Laufpolstern aus den Gleiskettengliedern.

Im Fahrbetrieb werden derartige Laufpolster durch hohe Flächenpressungen, Schubbelastungen und hohe dynamische Stoßbelastungen beansprucht.
Insbesondere bei hochmobilen Fahrzeugen kommt es durch Überbelastung häufig zu Anrissen im Grundblech, die in der Regel von dem Grund des Einschnittes der Zungenraste ausgehen. Werden die Anrisse nicht frühzeitig genug bemerkt oder Laufpolster mit angerissenen Grundblechen aufgrund des Gummiverschleißes nicht ausgebaut, so kommt es zum Durchbruch des Grundbleches. Laufpolster mit durchgebrochenen Grundblechen stellen eine potentielle Gefahr dar, da sie im Fahrbetrieb von der Kette abfliegen können.
Es wurden verschiedene Anstrengungen unternommen, die Anrißgefahr zu vermeiden oder zu reduzieren. Dazu wurde zum Beispiel der Kerbformfaktor durch Einbringen eines größeren Radius im Einschnittbereich der Zunge, sowie die Festlegung der Stanzrichtung beim Schneidvorgang zur Vermeidung von Beanspruchungsspitzen auf der Biegezugseite eingebracht. Auch eine Vergrößerung der Ausgangsblechdicke wurde versucht. Die Maßnahmen konnten die Rißproblematik nicht endgültig lösen.

Der Erfindung liegt die Aufgabe zugrunde, das Aufschiebestück so auszubilden, daß Anrisse und Brüche an Grundblechen von Aufschiebestücken für Gleisketten nicht auftreten.

Die Erfindung löst diese Aufgabe entsprechend den kennzeichnenden Merkmalen des Anspruchs 1. Vorteilhafte Weiterbildungen der Erfindung sind den Unteransprüchen zu entnehmen.

Die Lösung dieser Aufgabe besteht darin, die Sicherungszunge des Grundblechs nicht mehr einzuschneiden und auszuklinken, sondern das Grundblech mit einer Prägung im Bereich der früheren ausgeklinkten Zunge zu versehen, die die Funktion der Zungenraste wahrnimmt.
Das Grundblech ist nun nicht mehr durch die Einschnitte geschwächt. Es gibt keinen Kerbformfaktor mehr, der die Bauteilbeanspruchung erheblich erhöht hatte. Eine Verdickung des Grundbleches ist nicht erforderlich. Damit wird auch das Gewicht des Blechteiles nicht erhöht. Das Aufschiebestück ist in einfacher Weise durch die vorhandenen Bordwerkzeuge zu montieren und zu demontieren.
Durchgeführte Erprobungen haben gezeigt, daß über die Nutzungsdauer des Aufschiebestücks keine Anrisse und Brüche an den Grundblechen aufgetreten sind. Durch Wegfall der Einschnitte im Grundblech kommt es zu einer Kostensenkung.

Ausführungsbeispiele der Erfindung sind in der Zeichnung dargestellt. Es zeigt:
- Fig. 1, 2: Laufpolster in einem Gleiskettenglied im Querschnitt,
- Fig. 3: ein Laufpolster in einem Gleiskettenglied in perspektivischer Ansicht,
- Fig. 4: einen Schnitt IV - IV nach Fig. 3,
- Fig. 5: ein weiteres Laufpolster im Querschnitt in einem Gleiskettenglied,
- Fig. 6: einen Schnitt VI - VI nach Fig. 5,
- Fig. 7: ein Grundblech des Laufpolsters nach Fig. 5,
- Fig. 8: einen Abschnitt einer Gleiskette mit einem Laufpolster,
- Fig. 9: einen Teilschnitt eines Laufpolsters nach Fig. 8,
- Fig. 10: ein Grundblech des Laufpolsters nach den Fig. 8, 9 und
- Fig. 11: einen Querschnitt XI - XI nach Fig. 10.

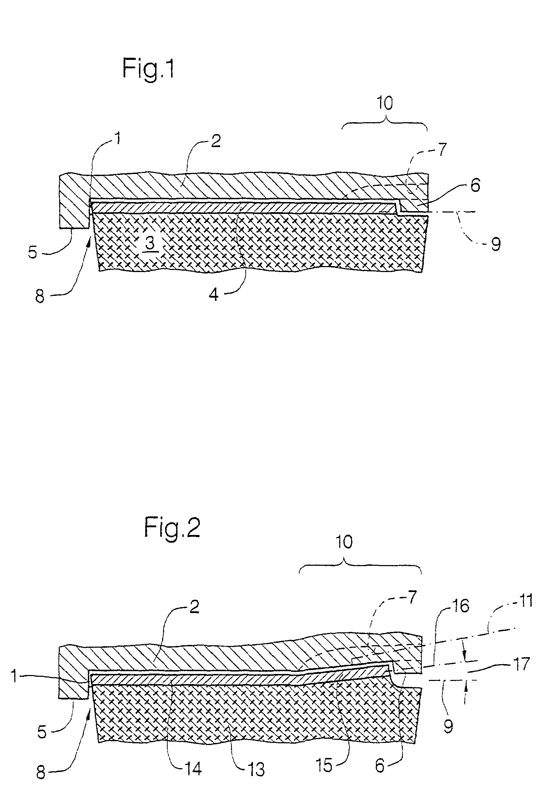

Entsprechend Figur 1 ist in nicht weiter dargestellten Führungsnuten 1 eines Rohrkörpers 2 ein Laufpolster 3 mit einem Grundblech 4 eingeschoben.

Das Grundblech 4 liegt zwischen zwei Anschlägen 5, 6 eingerastet, siehe Rastbereich 10. Beim Einschieben des Laufpolsters 3 mit dem Grundblech 4 in die Führungsnuten 1 gleitet das Grundblech 4 über den Anschlag 6. Dabei ist das Grundblech 4 elastisch verformt. Bei verschlissenem Laufpolster 3 ist das Grundblech 4 über eine gestrichelt gezeichnete Ausnehmung 7 mittels eines nicht dargestellten Werkzeuges 11 über den Anschlag 6 zu heben und über ein bei dem Pfeil 8 einzusetzendes, ebenfalls nicht dargestelltes Werkzeug herauszuhebeln. Das Grundblech 4 liegt in einer Hauptebene 9. Es ist einschnittfrei, also als zungenfreies Grundblech 4 ausgebildet.

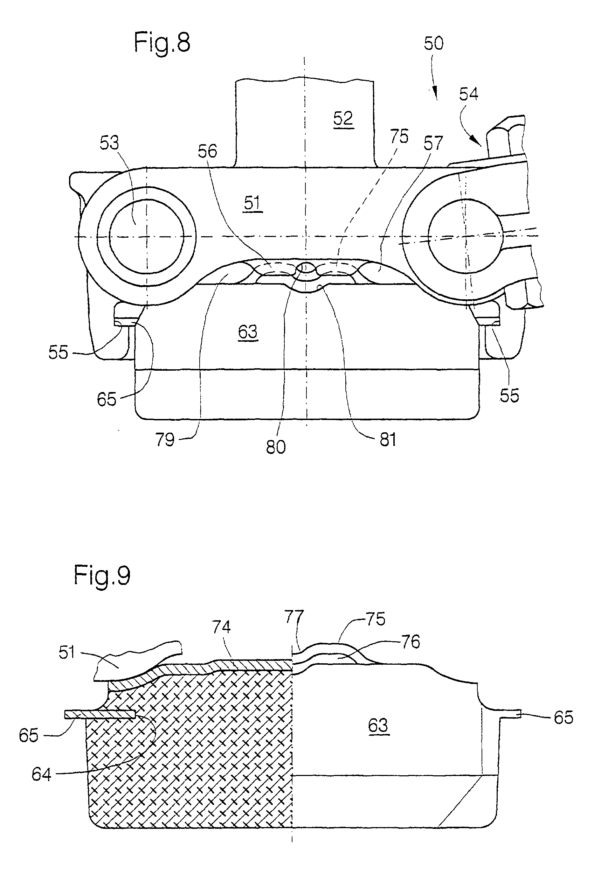

Entsprechend Figur 2 ist abweichend zu Fig. 1 ein Grundblech 14 mit einer durch spanlose Verformung gebildeten Zunge 15 versehen. Die Hauptebene 9 und die Zungenebene 16 bilden einen Winkel 17. Dadurch erfolgt ein Reibkontakt beim Ein- oder Herausschieben des Laufpolsters 13 aus dem Rohrkörper 2 nur zwischen der Zunge 15 und dem Anschlag 6. Die Verformungszonen im Rastbereich 10, die zur Herausbildung der Zunge 15 führen, sind zu Fig. 7 beschrieben.

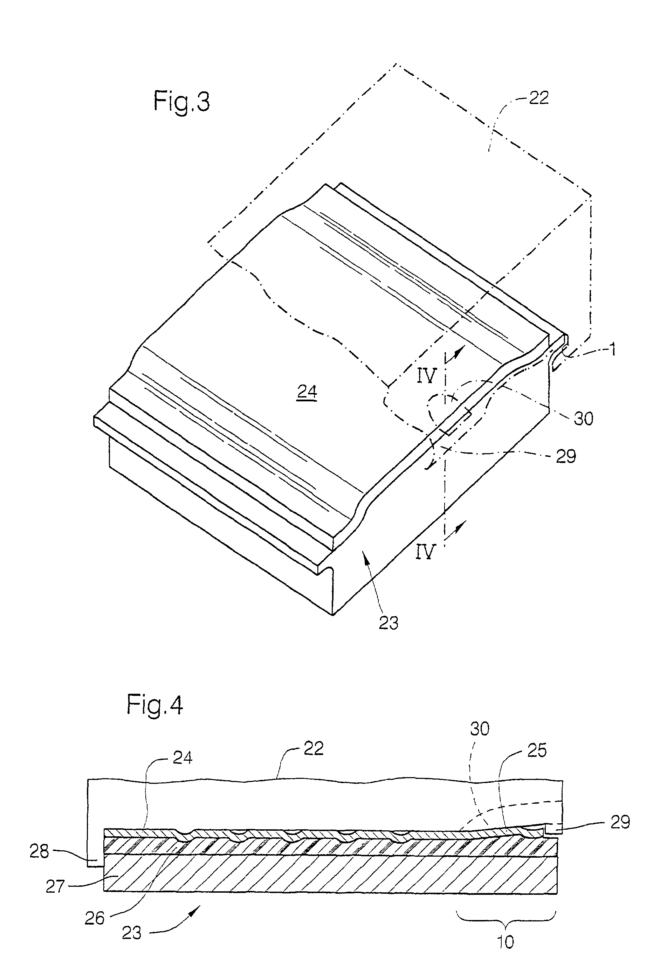

Nach den Figuren 3, 4 liegt bei einem Laufpolster 23 - analog zu den Fig. 2, 7 ein Grundblech 24 mit einer durch spanlose Verformung herausgebildeten Zunge 25 im Rastbereich 10 vor. Das Grundblech 24 erstreckt sich flächenmäßig zum größten Teil über das Laufpolster 23. Eine Elastomerschicht 26 liegt zwischen einem verschleißbaren Stahlkörper 27, der in die Führungsnuten 1 eines strichpunktiert gezeichneten Rohrkörpers 22 eingreift. Das Grundblech 24 liegt analog zu den Anschlägen 5, 6 nach den Fig. 1 und 2 ebenfalls zwischen Anschlägen 28, 29. Eine Ausnehmung zum Abheben der Zunge 25 aus dem Rohrkörper 22 sind mit 30 bezeichnet.

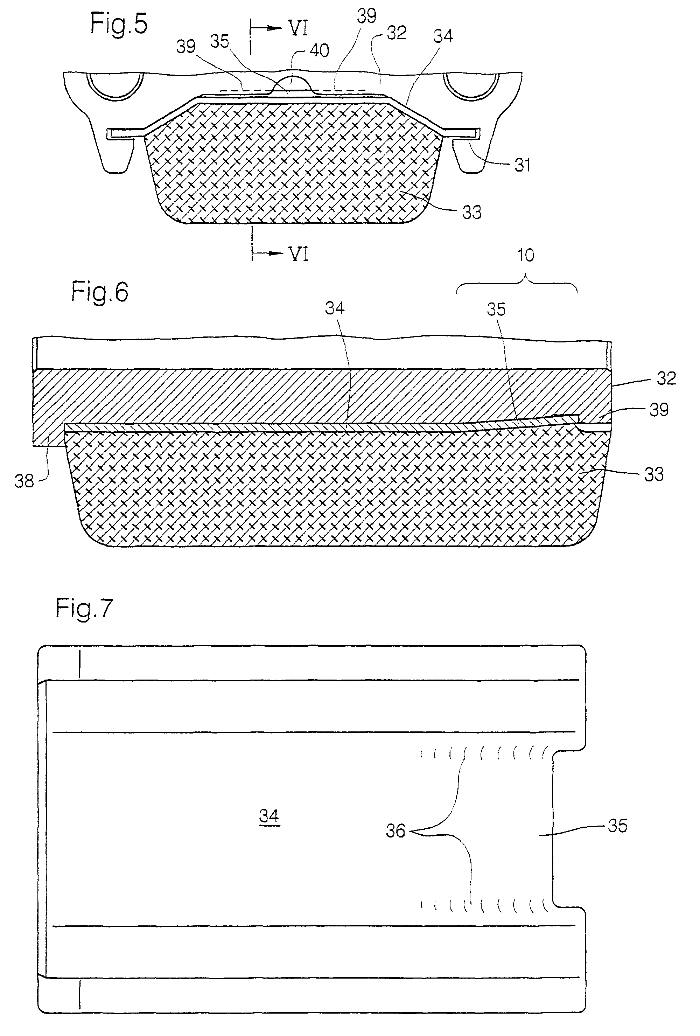

Nach den Figuren 5 bis 7 liegt bei einem, in einem Rohrkörper 32 fixierten Laufpolster 33 ein Grundblech 34 entsprechend den Figuren 2 und 4 vor. Das Grundblech 34 weist zwei Verformungszonen 36 im Rastbereich 10 auf Diese Verformungszonen 36 bewirken die Herausbildung einer Zunge 35 entsprechend dem Winkel 17 gegenüber der Hauptebene 9, siehe Fig. 2. Das Grundblech 34 ist Träger des Laufpolsters 33 und gleichzeitig dient es zur formschlüssigen Verbindung mit dem Rohrkörper 32 durch Eingriff in die Führungsnuten 31 des Rohrkörpers 32. Eine Ausnehmung 40 dient zum Ausrasten der Zunge 35 am Anschlag 39.

Bei einer Gleiskette 50 nach Fig. 8 sind Rohrkörper 51 mit Führungszähnen 52 über, in den Rohrkörpern 51 angeordnete, gummigelagerte Bolzen 53 und darauf befestigten Verbindern 54 gelenkig miteinander verbunden.

Jeder Rohrkörper 51 weist Führungsnuten 55 und Anschläge 56, 57 zur Fixierung eines Laufpolsters 63 auf. Der einschiebeseitige Anschlag trägt die Ziffer 56 und der rückseitige Anschlag die Ziffer 57.

Entsprechend Figur 9 sind mit dem Laufpolster 63 ein Zwischenblech 64 mit Führungsleisten 65 für die Führungsnuten 55 und ein Grundblech 74 mit einer Zunge 75 durch Vulkanisation verbunden. Die Zunge 75 ist im Rastbereich 10 durch Gummi unterlegt.

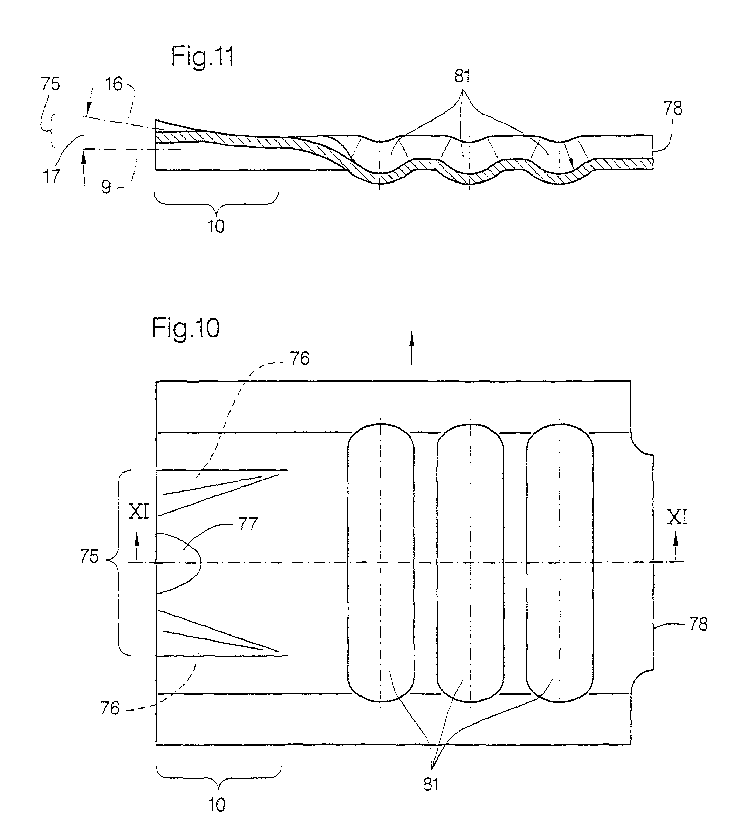

Die Zunge 75 des Grundblechs 74 weist entsprechend Figur 8 eine doppelte Wellenform auf. Diese wird durch die aus Figur 10 ersichtlichen drei Verformungszonen 76, 77 bewirkt.

Weiterhin besitzt das Grundblech 74 einen Endanschlag 78. Dieser korrespondiert mit einer Rückwand 79 mit dem Anschlag 57 des Rohrkörpers 51.

Der Anschlag 56 des Rohrkörpers 51 ist mit einer mittigen Einbuchtung 80 versehen, die mit einer gegenüberliegenden Einbuchtung 81 des Laufpolsters 63 korrespondiert.

Schließlich weist das Grundblech 74 in Laufrichtung 80 der Gleiskette 50 liegende Versteifungssicken 81 1 auf, siehe Fig. 10.

## Patentansprüche

1. Gleiskettenglied bestehend aus einem Grundkörper (2, 32) mit Führungsnuten (31) und einer Rastung (6, 10) für Aufschiebestücke (3, 33), wie Laufpolster, Stollen, Schnee- oder Schlammgreifer, Schwimmhilfen,
wobei das Aufschiebestück (3, 33) ein federndes Grundblech (4, 14, 34) aufweist, das an einem Anschlag (6, 39) mit zugeordneter Ausnehmung (7, 40) des Grundkörpers (2, 32) eingerastet ist,
das Aufschiebestück (3, 33) in den Führungsnuten (1, 31) des Grundkörpers (2, 32) liegt,
wobei das Grundblech (4, 34) über den Anschlag (6, 39) des Grundkörpers (32) beim Ein- und Ausschieben gleitet,
und beim Ausschieben das Grundblechs (4, 34) aufgrund eines, in die Ausnehmung (7, 40) steckbaren Hebels über den Anschlag (6, 39) hebbar ist,
**dadurch gekennzeichnet,**
**daß** das Grundblech (4) entweder im Rastungsbereich (10) einschnittsfrei, also zungenfrei ausgebildet ist oder
das Grundblech (14, 34) im Rastbereich (10) durch spanloses Verformen geformte Verformungszonen (36, 76) aufweist.

2. Gleiskettenglied nach Anspruch 1,
**dadurch gekennzeichnet,**
**daß** das Grundblech (4) im Rastbereich (10) in der Hauptebene (9) des Grundbleches (4) liegt.

3. Gleiskettenglied nach Anspruch 1,
**dadurch gekennzeichnet,**
**daß** das Grundblech (14) im Rastbereich (10) mit der Hauptebene (9) des Grundblechs (14) einen Winkel (17) bildet.

4. Gleiskettenglied nach Anspruch 3,
**dadurch gekennzeichnet,**
**daß** das Grundblech (14) im Rastbereich (10) durch spanloses Verformen, wie Prägen, den Winkel (17) bildet.

5. Gleiskettenglied nach Anspruch 1,
**dadurch gekennzeichnet,**
**daß** das in einem Laufpolster von einem Zwischenblech (64) beabstandete Grundblech (74) zungenfrei ausgebildet ist,
und das Zwischenblech mit Führungsleisten (65) in die Führungsnuten (1) des Rohrkörpers (51) greift.

6. Gleiskettenglied nach Anspruch 1,
**dadurch gekennzeichnet,**
**daß** eine durch die Verformungszonen (36, 76) gebildete Zunge (15) in Schieberichtung in Bezug auf den überbrückbaren Anschlag (6) für die Zunge (15) eine Anlaufschräge (Winkel 17) aufweist.

7. Gleiskettenglied nach Anspruch 1,
**dadurch gekennzeichnet,**
**daß** das Grundblech (4) im Bereich des Anschlags (6) eine durchgehende, nicht unterbrochene Stirnfläche aufweist.

8. Gleiskettenglied nach Anspruch 7,
**dadurch gekennzeichnet,**
**daß** das Grundblech (74) eine durch Verformungszonen (76, 77) bewirkte, doppelte Wölbung als Anschlag besitzt.

## Claims

1. Caterpillar track link consisting of a base element (2, 32) with guiding grooves (31) and snap-in means (6, 10) for slip-on components (3, 33), such as tread pads, studs, snow- or sludge-gripping devices, buoyancy aids,
in which the slip-on component (3, 33) has a resilient base plate (4, 14, 34), which is locked on to a stop (6, 39) with associated recess (7, 40) of the base element (2, 32),
the slip-on component (3, 33) is located in the guiding grooves (1, 31) of the base element (2, 32),
in which the base plate (4, 34) slides over the stop (6, 39) of the base element (32) when being pushed in and out,
and, when being pushed out, the base plate (4, 34) can be lifted over the stop (6, 39) by means of a lever which can be inserted in the recess (7, 40),
**characterized in that**
the base plate (4) is either formed so as to be indentation- or notch-free, i.e. tongue-free, in the snap-in area (10), or
the base plate (14, 34) has areas of deformation (36, 76) in the snap-in area (10) which are formed by non-cutting shaping.

2. Caterpillar track link according to Claim 1,
**characterized in that**,
in the snap-in area (10), the base plate (4) lies on the principal plane (9) of the base plate (4).

3. Caterpillar track link according to Claim 1,
**characterized in that**,
in the snap-in area (10), the base plate (14) forms an angle (17) with the principal plane (9) of the base plate (14).

4. Caterpillar track link according to Claim 3,
**characterized in that**,
in the snap-in area (10), the base plate (14) forms the angle (17) as the result of non-cutting shaping, such as stamping or embossing.

5. Caterpillar track link according to Claim 1,
**characterized in that**
the base plate (74), disposed in a tread pad at a distance from an intermediate plate (64), is formed so as to be tongue-free,
and the intermediate plate with guiding ribs (65) engages in the guiding grooves (1) of the tubular element (51).

6. Caterpillar track link according to Claim 1,
**characterized in that**
a tongue (15), formed by the areas of deformation (36, 76), has an entry slope (angle 17) for the tongue (15) in the sliding direction in respect of the bridgeable stop (6).

7. Caterpillar track link according to Claim 1,
**characterized in that**
the base plate (4) has a continuous, uninterrupted end face in the region of the stop (6).

8. Caterpillar track link according to Claim 7,
**characterized in that**
the base plate (74) has a double curve as a stop, which is produced by areas of deformation (76, 77).

## Revendications

1. Elément de chenille constitué d'un corps de base (2, 32) avec des rainures de guidage (31) et un dispositif d'accrochage (6, 10) pour des pièces à enfiler (3, 33) telles que des coussins de roulement, des crampons, des crampons à neige ou à boue, des auxiliaires de flottaison, la pièce à enfiler (3, 33) présentant une tôle de base (4, 14, 34) élastique qui est accrochée à une butée (6, 39) avec évidement (7, 40) correspondant du corps de base (2, 32), la pièce à enfiler (3, 33) se trouvant dans les rainures de guidage (1, 31) du corps de base (2, 32), la tôle de base (4, 34) glissant sur la butée (6, 39) du corps de base (32) lorsqu'on l'enfile et on l'extrait, et lorsqu'on enfile la tôle de base (4, 34), celle-ci peut se soulever de la butée (6, 39), en raison d'un levier qui peut être inséré dans l'évidement (7, 40), **caractérisé en ce que** la tôle de base (4) ne présente pas d'entaille dans la zone d'accrochage (10), c'est-à-dire qu'elle ne présente pas de languette ou la tôle de base (14, 34) présente, dans la zone d'accrochage (10), des zones de déformation (36, 76) obtenues par déformation sans enlèvement de copeaux.

2. Elément de chenille selon la revendication 1, **caractérisé en ce que** la tôle de base (4) se situe dans la zone d'accrochage (10), dans le plan principal (9) de la tôle de base (4).

3. Elément de chenille selon la revendication 1, **caractérisé en ce que** la tôle de base (14) forme un angle (17) avec le plan principal (9) de la tôle de base (14), dans la zone d'accrochage (10).

4. Elément de chenille selon la revendication 3, **caractérisé en ce que** la tôle de base (14) forme l'angle (17) dans la zone d'accrochage (10), par déformation sans enlèvement de copeaux, par exemple par emboutissage.

5. Elément de chenille selon la revendication 1, **caractérisé en ce que** la tôle de base (74), éloignée d'une tôle intermédiaire (64) dans un coussin de roulement, ne présente pas de languette, et la tôle intermédiaire s'engage, par des baguettes de guidage (65), dans les rainures de guidage (1) du corps tubulaire (51).

6. Elément de chenille selon la revendication 1, **caractérisé en ce qu'**une languette (15), formée par les zones de déformation (36, 76), présente, dans le sens d'enfilement, une surface oblique de butée (angle 17), par rapport à la butée (6) qui peut être franchie, pour la languette (15).

7. Elément de chenille selon la revendication 1, **caractérisé en ce que** la tôle de base (4) présente une surface frontale continue, non interrompue dans la zone de la butée (6).

8. Elément de chenille selon la revendication 7, **caractérisé en ce que** la tôle de base (74) possède une double courbure, provoquée par des zones de déformation (76, 77), servant de butée.
